# EUROPÄISCHE PATENTANMELDUNG

(11) **EP 2 258 943 A2**
(43) Veröffentlichungstag der Anmeldung: **08.12.2010**
(21) Anmeldenummer: 10183781.3
(22) Anmeldetag: 29.03.2004
(51) Int. Cl.: F03D 1/06

(54) **Profil eines Rotorsblatts einer Windenergieanlage**

(30) Priorität: 28.04.2003 DE 10319246
(62) Teilanmeldung aus: 04723988.4
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

Die Erfindung betrifft ein Rotorblatt einer Windenergieanlage sowie eine Windenergieanlage.

Aufgabe der vorliegenden Erfindung ist es, ein Rotorblatt mit einem Rotorblattprofil bzw. eine Windenergieanlage anzugeben, welches bzw. welche eine bessere Leistungsfähigkeit als bisher aufweist.

Rotorblatt einer Windenergieanlage, wobei das Rotorblatt in zwei Bereiche aufgeteilt ist, wobei das Rotorblatt eine Rotorblattwurzel (21) aufweist, und wobei das Rotorblatt in dem zur Rotorblattwurzel benachbarten Bereich die größte Blatttiefe aufweist, wobei das Rotorblatt in einen vorderen Bereich (110) und einen Hinterkasten (140) aufgeteilt ist, der Hinterkasten aus zwei Bahnen verformbaren Materials (180) besteht, die zusammen mit der Rückwand des vorderen Bereichs (110) einen geschlossenen Behälter (160) bilden und der geschlossene Behälter (160) mit einem gasförmigen Medium unter Druck befüllbar ist und das verformbare Material einen Teil der im Normalbetrieb aerodynamisch wirksamen Oberfläche des Rotorblattes bildet.

## Beschreibung

Die Erfindung betrifft ein Rotorblatt einer Windenergieanlage sowie eine Windenergieanlage.

Als Stand der Technik hierzu sei allgemein auf das Buch "Windkraftanlagen", Erich Hau, 1996, verwiesen. Dieses Buch enthält einige Beispiele für Windenergieanlagen, Rotorblätter solcher Windenergieanlagen sowie Querschnitte solcher Rotorblätter aus dem Stand der Technik. Auf Seite 102, Bild 5.34., sind die geometrischen Profilparameter von aerodynamischen Profilen gemäß NACA dargestellt. Dabei ist zu sehen, dass das Rotorblatt beschrieben wird durch eine Profiltiefe, die der Länge der Sehne entspricht, einer größten Wölbung (oder Wölbungsverhältnis) als maximale Erhebung einer Skelettlinie über der Sehne, einer Wölbungsrücklage, also dem Ort bezogen auf die Profiltiefe, wo die größte Wölbung innerhalb des Querschnittes des Rotorblattes ausgebildet ist, eine größte Profildicke als größter Durchmesser eines eingeschriebenen Kreises mit dem Mittelpunkt auf der Skelettlinie und der Dickenrücklage, also dem Ort bezogen auf die Profiltiefe, wo der Querschnitt des Rotorblatts seine größte Profildicke annimmt. Ferner werden der Nasenradius sowie die Profilkoordinaten der Unter- und Oberseite zur Beschreibung des Querschnitts des Rotorblatts herangezogen. Die aus dem Buch Erich Hau bekannte Nomenklatur soll u. a. für die weitere Beschreibung des Querschnitts eines Rotorblatts für die vorliegende Anmeldung beibehalten werden.

Als allgemeiner weiterer Stand der Technik sei auf die Dokumente DE 103 07 682; US 5,474,425; US 6,068,446 sowie DE 694 15 292 hingewiesen.

Rotorblätter sind anhand einer Vielzahl von Aspekten zu optimieren. Einerseits sollen sie leise sein, andererseits sollen sie auch eine maximale dynamische Leistung bereitstellen, damit bei schon recht geringem Wind die Windenergieanlage zu laufen beginnt und bei möglichst geringen Windstärken bereits die Nennwindgeschwindigkeit erreicht wird, also die Geschwindigkeit, bei welcher auch erstmals die Nennleistung der Windenergieanlage erreicht wird. Steigt dann die Windgeschwindigkeit weiter an, so wird heutzutage bei pitchregulierten Windenergieanlagen das Rotorblatt immer mehr in den Wind gestellt, so dass die Nennleistung weiter erhalten bleibt, die Angriffsfläche des Rotorblatts zum Wind jedoch abnimmt, um somit die gesamte Windenergieanlage bzw. ihre Teile vor mechanischen Schäden zu schützen. Entscheidend ist aber, dass den aerodynamischen Eigenschaften der Rotorblattprofile des Rotorblatts einer Windenergieanlage eine große Bedeutung zukommt.

Aufgabe der vorliegenden Erfindung ist es, ein Rotorblatt mit einem Rotorblattprofil bzw. eine Windenergieanlage anzugeben, welches bzw. welche eine bessere Leistungsfähigkeit als bisher aufweist.

Die Aufgabe wird erfindungsgemäß mit einem Rotorblatt mit einem Rotorblattprofil mit den Merkmalen nach einem der unabhängigen Ansprüche gelöst. Vorteilhafte Weiterbildungen sind in den abhängigen Ansprüchen beschrieben.

Die konkreten Koordinaten eines erfindungsgemäßen Rotorblattprofils nach der Erfindung sind in einer Tabelle 1 angegeben.

Die Erfindung ist nachfolgend von mehreren Zeichnungen dargestellt. Hierin zeigen:
- Fig. 1: eine Ansicht einer erfindungsgemäßen Windenergieanlage aus einer Perspektive von vorne,
- Fig. 2: eine Ansicht einer erfindungsgemäßen Windenergieanlage aus einer Perspektive von seitlich hinten,
- Fig. 3: die Ansicht einer erfindungsgemäßen Windenergieanlage von der Seite,
- Fig. 4-8: Ansichten eines erfindungsgemäßen Rotorblatts aus verschiedenen Richtungen
- Fig. 9: eine vergrößerte Ansicht einer erfindungsgemäßen Windenergieanlage
- Fig. 10: eine Ansicht eines erfindungsgemäßen Rotorblatts
- Fig. 11-17,19: verschiedene Ansichten einer erfindungsgemäßen Windenergieanlage
- Fig. 18: einen Querschnitt eines erfindungsgemäßen Rotorblatts (im nabennahen Bereich)

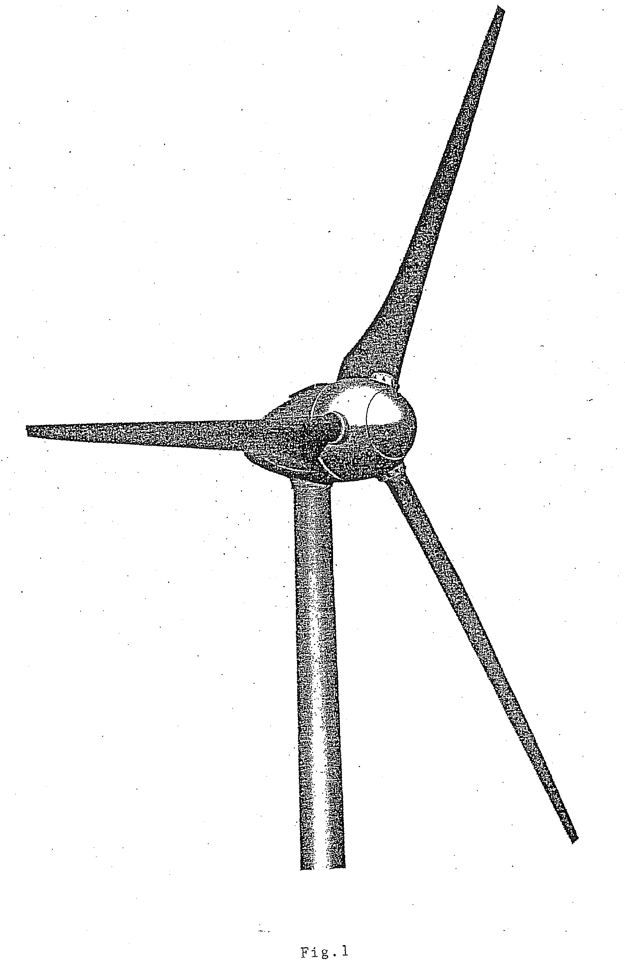

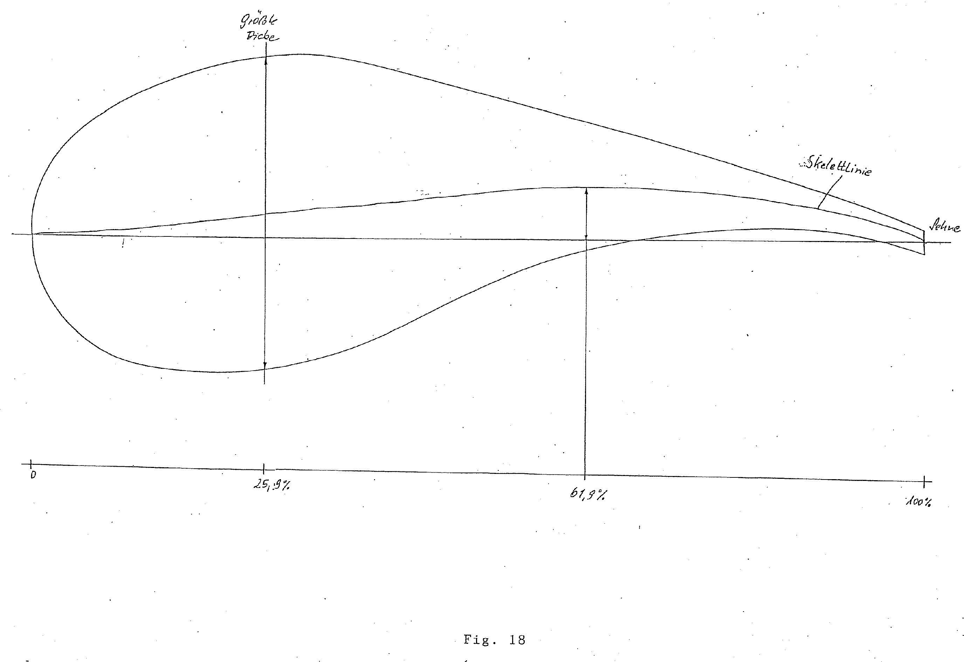

Das gemäß der vorliegenden Anmeldung beschriebene Rotorblattprofil ist im Besonderen in dem Bereich des Rotorblatts ausgebildet, der dem Rotorblattanschluss (zum Anschluss an die Nabe) anschließt. Bevorzugt ist das in der vorliegenden Anmeldung beschriebene Profil im ersten Drittel des Rotorblatts, bezogen auf die Gesamtlänge des Rotorblatts, ausgebildet. Die Gesamtlänge eines Rotorblatts kann hierbei durchaus im Bereich von 10 m bis 70 m liegen, je nachdem, welche Nennleistung eine Windenergieanlage haben soll. So beträgt beispielsweise die Nennleistung einer Windenergieanlage der Firma Enercon vom Typ E-112 (Durchmesser ca. 112 m) 4,5 MW, die Nenn-Leistung einer Windenergieanlage der Firma Enercon vom Typ E-30 beträgt hingegen 300 KW. Besonders charakteristisch für das Profil des erfindungsgemäßen Rotorblatts ist, dass die größte Profildicke etwa 25 % bis 40 %, bevorzugt 32 % bis 36 % der Länge der Rotorblattsehne ausmacht. In der Fig. 18 beträgt die größte Profildicke etwa 34,6 % der Länge der Rotorblattsehne. In der Fig. 1 ist eine Sehne 1 eingetragen, die von der Mitte 2 der Rotorblatthinterkante 3 bis zum vordersten Punkt 4 der Rotorblattnase 5 verläuft. Die Dickenrücklage, also der Ort bezogen auf die Blattlänge, wo die größte Profildicke ausgebildet ist, beträgt etwa 20 % bis 30 % der Länge der Sehne, bevorzugt 23 % bis 28 %, im dargestellten Beispiel 25,9 %. Die größte Dicke wurde senkrecht zu der Sehne ermittelt und die Rücklage ist auf die Rotorblattnase bezogen.

Weiterhin ist in der Fig. 18 eine sog. Skelettlinie 7 eingetragen. Diese Skelettlinie ergibt sich aus der jeweiligen halben Dicke des Rotorblattes 8 an einem Punkt. Entsprechend verläuft diese Skelettlinie nicht geradlinig, sondern immer exakt zwischen gegenüberliegenden Punkten auf der Druckseite 9 des Rotorblattes 7 und der Saugseite 10 des Rotorblattes 7. Die Skelettlinie schneidet die Sehne an der Rotorblatthinterkante und der Rotorblattnase.

Die Wölbungsrücklage beim Querschnitt eines erfindungsgemäßen Rotorblatts beträgt etwa 55 % bis 70 % der Länge der Sehne, bevorzugt etwa 59 % bis 63 %. Im dargestellten Beispiel beträgt die Wölbungsrücklage etwas 61,9 % der Länge der Sehne. Die größte Wölbung beträgt hierbei etwa 4 % bis 8 % der Länge der Sehne, bevorzugt etwa 5 % bis 7 % der Länge der Sehne. Im dargestellten Beispiel beträgt die Wölbung etwa 5,87 % der Länge der Sehne.

Besonders augenfällig ist für das Profil des erfindungsgemäßen Rotorblatts weiterhin, dass die Druckseite des Rotorblatts zweimal die Sehne "schneidet", in diesem Bereich also die Druckseite des Profils konkav ausgebildet ist, während im vorderen Profilbereich, die Druckseite konvex ausgebildet ist. In dem Bereich, wo die Druckseite konkav ausgebildet ist, ist im entsprechenden, gegenüberliegenden Bereich auf der Saugseite diese fast geradlinig begrenzt.

Es mag durchaus bekannt gewesen sein, die Druckseite mit einer konkaven Krümmung auszubilden oder die Saugseite mit einer geradlinigen Begrenzung zu versehen. Besonders die Kombination beider Maßnahmen ist aber für das Profil eines erfindungsgemäßen Rotorblatts von großer Bedeutung und charakteristisch für das erfindungsgemäße Rotorblattprofil.

Auch die Rotorblatthinterkante des dargestellten Profils ist auffallend dick. Dies ist jedoch bezüglich der Ausbildung von Schall an der Rotorblatthinterkante nicht problematisch, weil das dargestellte Profil sich im inneren Drittel des Rotorkreises befindet und dort die Bahngeschwindigkeit nicht sehr hoch ist.

Die x-y-Koordinaten des in der Fig. dargestellten Profils sind in Tabelle 1 wiedergegeben und damit wird das Profil des erfindungsgemäßen Rotorblatts exakt beschrieben.

Zur Verbesserung der aerodynamischen Form des Rotorblatts ist dieses in dem Bereich der Rotorblattwurzel so ausgebildet, dass es dort seine größte Breite aufweist und somit das Rotorblatt eine der aerodynamischen Optimalform mehr oder weniger angenäherte Trapezform (in der Aufsicht) aufweist. Bevorzugt ist das Rotorblatt im Bereich der Rotorblattwurzel so ausgebildet, dass die der Gondel einer Windenergieanlage zugewandte Kante der Rotorblattwurzel der äußeren Kontur der Gondel in wenigstens einer Winkelstellung angepasst ist, z. B. derart angepasst ist, dass zwischen der Gondel und der der Windenergieanlage zugewandten Kante der Rotorblattwurzel und der äußeren Kontur der Gondel bei Stellung des Rotorblatts in Nenn-Windstellung ein sehr geringer Abstand, z. B. einen Abstand von etwa 5 mm bis 100 mm besteht.

Bei einem Rotorblatt mit den vorgenannten Eigenschaften hat sich eine signifikant höhere Leistungssteigerung, z. T. bis zu 10 % ergeben. Durch diese nicht vorhersagbare Leistungssteigerung erreicht eine erfindungsgemäße Windenergieanlage bei einer gegebenen Windgeschwindigkeit unterhalb der Nennwindgeschwindigkeit eine höhere Leistung. Außerdem erreicht sie früher als bisher ihre Nennleistung. Entsprechend können die Rotorblätter auch früher gedreht (gepitcht) werden und damit sinkt die Schallemission einerseits und die mechanische Belastung der Anlage andererseits.

Dabei liegt der Erfindung die Erkenntnis zugrunde, dass die heute gängige Rotorblattform im Windkanal zwar bei unterschiedlichen Windgeschwindigkeiten, aber stets gleichförmiger Luftströmung untersucht wird. Da der Wind in der Natur aber in den seltensten Fällen in der Fläche gleichförmig weht, sondern einer stochastischen Gesetzmäßigkeit unterliegt, kommt es bei den bekannten Rotorblättern in Folge von Böen zur Ablösung der Strömung gerade im Blattinnenbereich nahe der Rotornabe, wo das Blatt eben nicht mehr aerodynamisch sauber und optimal ausgebildet ist. Diese Strömungsablösung setzt sich in Richtung des Rotorblattaußenbereichs (Rotorblatttip) ein Stück entlang des Rotorblattes fort. Dadurch kann sich die Strömung vom Rotorblatt in einem blasenförmigen Bereich vom Rotorblatt lösen und so zu entsprechenden Leistungseinbußen führen. Bei der Erfindung und bei Betrachtung der vorbeschriebenen Ausgangssituation kann also durch ein sauber ausgebildetes Rotorblatt auch im Rotorblattinnenbereich eine erhebliche Leistungssteigerung erzielt werden.

Würde man nunmehr ein bekanntes Standardprofil anstelle des in der vorliegenden Anmeldung vorgeschlagenen, empirisch ermittelten Profils verwenden, wäre für eine aerodynamisch saubere Ausbildung des Rotorblatts etwa die doppelte Profiltiefe (dies entspricht der Länge der Sehne des Rotorblattes) im unteren Rotorblattbereich (nabennahen Bereich) erforderlich. Die hohe Profildicke im vorderen Bereich ist aber für einen sicheren Lastabtrag und zur Erreichung eines Auftriebswertes C_{A} größer als 2 erforderlich.

Wie aus dem Stand der Technik bekannt ist, werden heutzutage regelmäßig Rotorblätter gebaut, die im Innenbereich möglichst eine große Materialeinsparung aufweisen. Typische Beispiele hierfür zeigt der bereits erwähnte Stand der Technik nach "Windkraftanlagen", Erich Hau, 1996, auf den Seiten 114 und 115. Dort ist zu sehen, dass die größte Profiltiefe stets in einem gewissen Abstand vom Rotorblattanschluss erreicht wird, also im rotorblattanschlussnahen Bereich, wobei bei diesen Rotorblättern gemäß dem Stand der Technik Material einspart wird. Wird aber in der Aufsicht eine der Trapezform angenäherte Optimalform verwendet, so ist die größte Breite eines Rotorblattes nicht etwa in einem Abstand zum Rotorblattanschluss, sondern genau im Bereich des Rotorblattanschlusses selbst ausgebildet. Im Innenbereich der Rotorblätter wird dann also nicht möglichst viel Material einspart.

Die Ursache für die bislang vorgenommene Materialeinsparung liegt in der statischen Betrachtungsweise der Strömungsverhältnisse (wie vorbeschrieben) bei der Berechnung/Entwicklung der Rotorblätter. Hinzu kommt, dass gängige Berechnungsprogramme für Rotorblätter das Rotorblatt in einzelne Abstände aufteilen und jeden Blattabschnitt für sich berechnen, um daraus die Bewertung für das gesamte Rotorblatt abzuleiten.

Die Realität sieht allerdings anders aus. Einerseits bläst der Wind nicht gleichmäßig und statisch innerhalb eines bestimmten Flächenbereichs, sondern zeigt deutlich ein stochastisches Verhalten, andererseits ist aufgrund der geringen Umfangsgeschwindigkeit des Rotorblattes im Innenbereich (also im rotornabennahen Bereich) der Einfluss der Windgeschwindigkeit beträchtlich und damit ändert sich der Anstellwinkel in diesem Bereich mit einer hohen Abhängigkeit von der momentan Windgeschwindigkeit. In Folge dessen kommt es entsprechend häufig zum Ablösen der Strömung vom Rotorblatt auch im Innenbereich des Rotorblatts.

In einem solchen Fall ist eine Hysterese wirksam. Die Strömung legt sich bei erneutem Auftreten der vorherigen Windgeschwindigkeit, z. B. nachdem eine Böe vorüber ist, nicht wieder gleich an das Rotorblatt an. Vielmehr muss die Windgeschwindigkeit zunächst weiter absinken (der Anstellwinkel muss sich also weiter verändern), bis die Strömung sich wieder an die Rotorblattoberfläche anlegt. Sinkt die Windgeschwindigkeit aber nicht weiter ab, so kann es durchaus sein, dass für einen längeren Zeitraum trotz anströmenden Windes eine relevante Kraft auf das Rotorblatt ausgeübt wird, weil sich die Strömung noch nicht wieder an die Rotorblattoberfläche angelegt hat.

Durch die erfindungsgemäße Ausführung des Rotorblattes wird die Gefahr der Strömungsablösung deutlich verringert. Diese Ablösegefahr wird ebenfalls durch das relativ dicke Profil verringert. Die beträchtliche Leistungssteigerung lässt sich auch dadurch gut erklären, dass durch die Hysterese-Wirkung bei einmal aufgetretener Ablösung der Strömung die Leistungseinbußen über einem beträchtlichen Zeitraum (für Rotorblätter gemäß dem Stand der Technik) aufrechterhalten bleibt.

Ein weiterer Teil der Leistungssteigerung lässt sich dadurch erklären, dass auch der Wind den Weg des geringsten Widerstandes nutzt. Wenn also das Rotorblatt im nabennahen Innenbereich sehr dünn (große Materialeinsparung) ist, kommt dies einem "Schlupfloch" in der Erntefläche des Rotorkreises gleich, durch welches die Luft bevorzugt strömt. Auch hier ist durchaus eine Schwäche der gängigen Berechnungsprogramme erkennbar, die stets von einer gleichförmigen Verteilung über die Rotorkreisfläche ausgehen.

"Verschließt" man nun dieses "Schlupfloch" durch die trapezförmige Ausbildung des Rotorblatts im nabennahen Bereich, wird sich eine bessere Verteilung der Luftströmung über die gesamte Kreisfläche einstellen und somit wird auch die Wirkung auf den äußeren Bereich des Rotorblatts noch etwas erhöht. Entsprechend leistet daher das "Verschließen" dieses "Schlupfloches" einen Beitrag zur höheren Leistungsausbeute des erfindungsgemäßen Rotorblattes.

Hier liegt ein weiterer Schwachpunkt der gängigen Berechnungsprogramme, denn diese betrachten auch den unmittelbar an das "Schlupfloch" angrenzenden Rotorblattabschnitt als vollwertigen Rotorblattabschnitt, der wegen der besonderen Strömungsverhältnisse (häufige Strömungsabrisse und ein späteres Wiedereinstellen der vorgesehenen Strömungsverhältnisse) nicht sein kann.

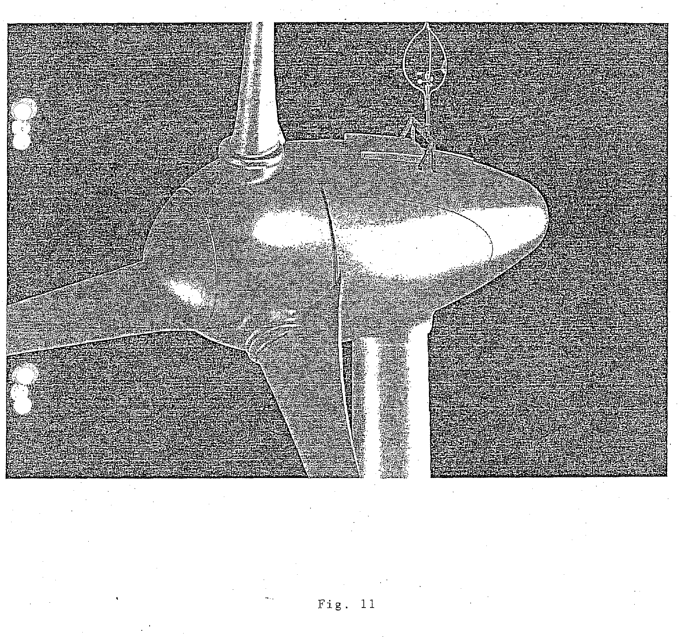

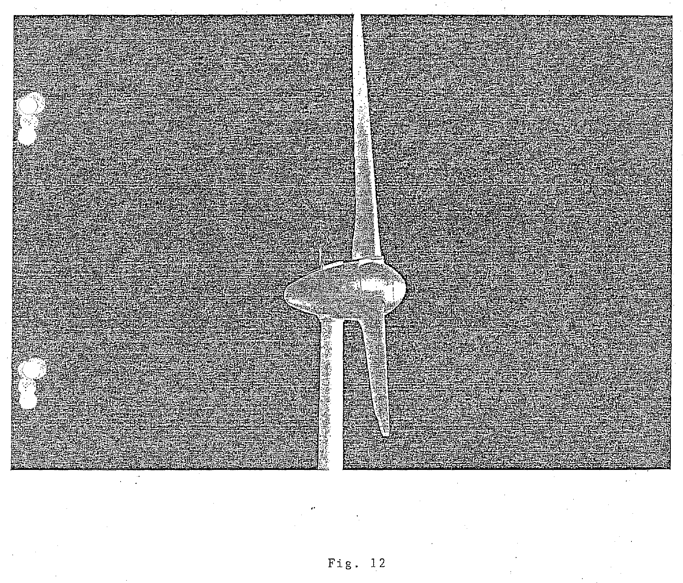

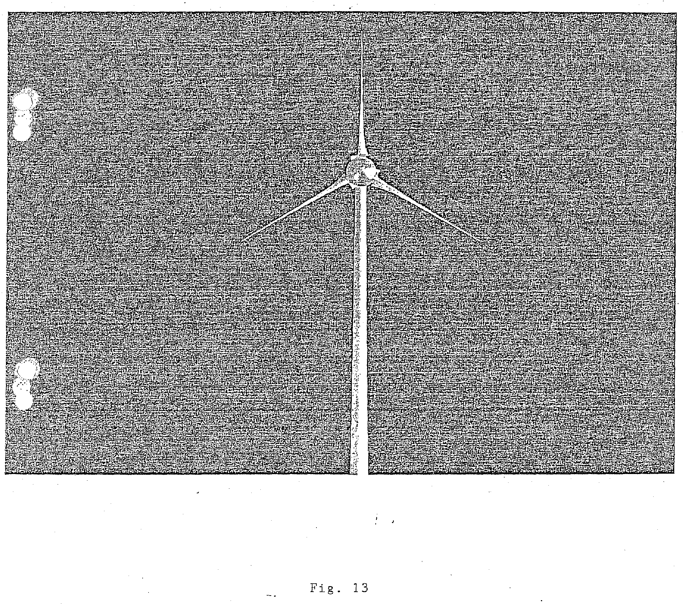

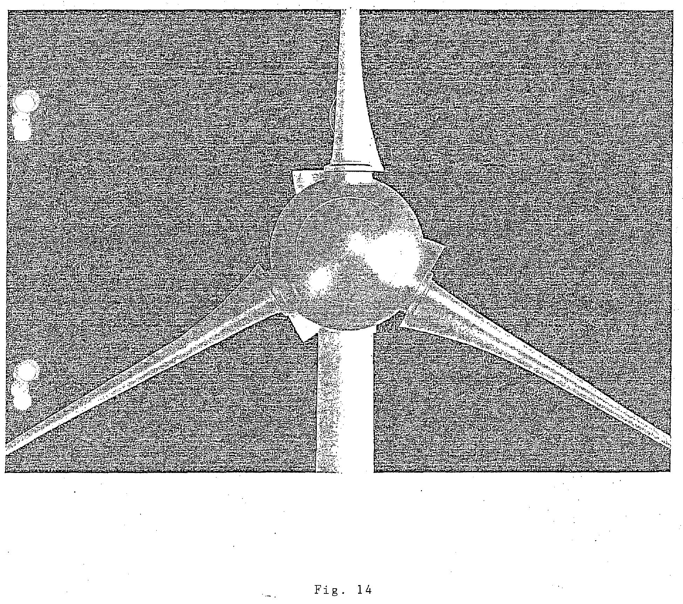

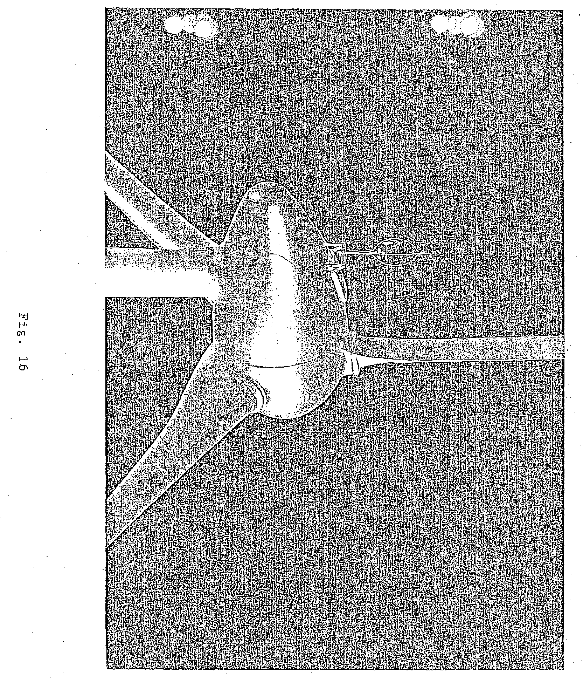

Fig. 11 bis 17 zeigen die Ansicht einer erfindungsgemäßen Windenergieanlage von vorne oder von der Seite. Hierbei ist zu erkennen, wie die drei Rotorblätter im nabennahen Bereich fast nahtlos in die äußere Gestaltung der Gondel übergehen. Dies gilt jedoch nur für die Stellung der Rotorblätter, soweit diese sich in Nenn-Windstellung befinden.

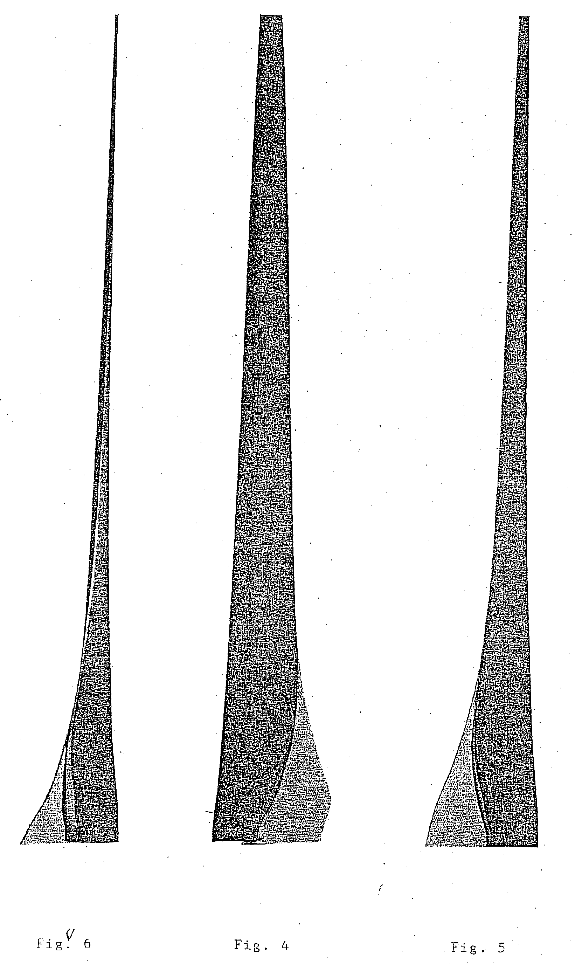

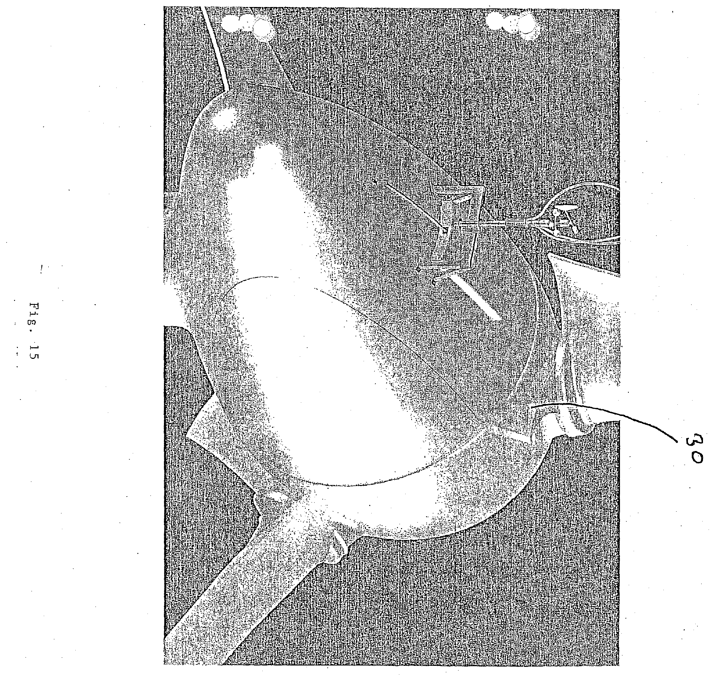

Wenn der Wind dann weiter über Nennwind ansteigt, werden wie üblich die Rotorblätter durch Pitchen (Pitchregelung) langsam aus dem Wind herausgenommen und Fig. 15 zeigt, dass dann durchaus ein größerer Abstand zwischen der unteren Kante des Rotorblattes im Innenbereich und der Gondel gegeben ist. Fig. 4 zeigt aber auch, dass auf der Außenseite der Gondel eine Struktur ausgebildet ist, die in ihrem Querschnitt dem Profil des Rotorblatts im nabenahen Bereich weitestgehend entspricht und bei Stellung des Rotorblatts in einem Anstellwinkel bei Nenngeschwindigkeit direkt unterhalb des Rotorblatts liegt, so dass nur ein kleiner Spalt zwischen der Struktur und dem Rotorblatt im nabennahen Bereich ausgebildet ist.

Mithin enthält auch die äußere Kontur der Gondel einen Teil des Rotorblatts, welches nicht integraler Bestandteil des Rotorblatts ist.

Bei dem in Fig. 18 dargestellten Rotorblattprofil beträgt der Nasenradius etwa 0,146 der Profiltiefe.

Wie in Fig. 18 zu erkennen, ist an der Saugseite ein längerer, nahezu geradliniger Bereich ausgebildet. Dieser lässt sich beispielsweise wie folgt beschreiben: Im Bereich 38 % bis 100 % der Profiltiefe beträgt der Radius 1,19 x der Länge der Profiltiefe. Im Bereich von 40 % bis 85 % der Profiltiefe (siehe Fig. 18) beträgt der Radius etwa 2,44 multipliziert mit der Profiltiefe. Im Bereich von 42 % bis 45 % der Profiltiefe beträgt der Radius etwa 5,56 der Profiltiefe.

Im Bereich von 36 % bis 100 % der Profiltiefe beträgt die maximale Abweichung von der idealen Geraden etwa 0,012 der Profillänge. Dieser Wert ist der maßgebende Wert, da der Krümmungsradius variiert und der größte Krümmungsradius bereits in den jeweiligen Bereichen angegeben wird.

Bei dem dargestellten Beispiel beträgt die Länge der Saugseite etwa 1,124 der Länge der Profiltiefe, die Länge der Druckseite beträgt 1,112 der Länge der Profiltiefe. Dies bedeutet, dass die Saugseite nur unwesentlich länger ist als die Druckseite. Es ist daher sehr vorteilhaft, wenn das Verhältnis der Saugseitenlänge zur Druckseitenlänge kleiner ist als 1,2, bevorzugt kleiner als 1,1 bzw. in einem Wertebereich zwischen 1 und 1,03 liegt.

Aus den dargestellten Fig. ist zu erkennen, dass das Rotorblatt seine größte Profiltiefe direkt am Spinner, also an der Außenseite der Gondel der Windenergieanlage aufweist. So kann beispielsweise bei einer Windenergieanlage mit einem Rotordurchmesser von 30 m die Profiltiefe am Spinner etwa 1,8 bis 1,9, bevorzugt 1,84 m betragen. Wenn der Spinner dann etwa einen Durchmesser von 3,2 m aufweist, so beträgt das Verhältnis der Profiltiefe des Rotorblatts am Spinner zum Spinnerdurchmesser etwa 0,575. Es ist daher sehr vorteilhaft, wenn das Verhältnis der Profiltiefe zum Spinnerdurchmesser größer ist als ein Wert von 0,4 bzw. in einem Wertebereich zwischen 0,5 und 1 liegt. Dabei kann jeder Wert aus dem vorgenanntem Wertebereich angenommen werden. In dem vorgenannten Beispiel beträgt das Verhältnis der Profiltiefe zum Rotordurchmesser etwa 0,061. Es liegt auf der Hand, dass daher das "Schlupfloch" möglichst gering ausfällt, wenn das Verhältnis der Profiltiefe zum Rotordurchmesser größer ist als ein Wert von 0,05 bis 0,01, wobei der beispielhafte Wert sich als äußerst günstig herausgestellt hat, was die Leistungsfähigkeit des Rotorblatts angeht.

Ein anderes Beispiel sei ein Rotorblatt mit dem Fig. 18 dargestellten Profilquerschnitt im ersten Drittel, wobei die Profiltiefe am Spinner etwa 4,35 m beträgt, der Spinnerdurchmesser 5,4 m beträgt und der Rotordurchmesser insgesamt 71 m beträgt. Dann liegt der Wert der Profiltiefe zum Spinnerdurchmesser bei 0,806 und das Verhältnis der Profiltiefe zum Rotordurchmesser wiederum bei 0,061. Die vorgenannten Werte beziehen sich auf einen Dreiblattrotor mit Pitchregelung.

Wie beschrieben, kann beim erfindungsgemäßen Rotorblatt die breiteste Stelle (die Stelle mit der größten Profiltiefe) des Rotorblatts direkt im Bereich des Blattanschlusses ausgebildet sein. Der Blattanschluss ist der Bereich, in dem das Rotorblatt an die Nabe der Windenergieanlage angeschlossen (verbunden, verschraubt usw.) wird. Darüber hinaus ist die untere Kante des Rotorblatts, also die Kante, die der Gondel der Windenergieanlage zugewandt ist, der äußeren Kontur der Gondel in Längsrichtung weitestgehend nachgeführt bzw. angepasst. Somit liegt hier ein Rotorblatt, wenn es sich in Fahnenstellung befindet (praktisch keine dem Wind ausgerichtete Fläche mehr), parallel zur unteren, der Gondel zugewandten Kante und der Abstand zwischen der unteren Kante und der äußeren Kontur der Gondel ist minimal, vorzugsweise weniger als 50 cm oder noch besser weniger als 20 cm.

Wird nun dieses Rotorblatt in den Wind gestellt, so hat es eine maximal große Fläche auch im sehr nahen Bereich des Rotorblatts (das Schlupfloch ist sehr gering). Die vorgenannte Entgegenhaltung Erich Hau zeigt, dass das Rotorblatt beim Stand der Technik im nabennahen Bereich regelmäßig abnimmt (die Rotorblätter sind dort weniger breit als an ihrer breitesten Stelle) und umgekehrt ist bei dem erfindungsgemäßen Rotorblatt die breiteste Stelle gerade im nabennahen Bereich, so dass auch das Windpotential dort größtmöglich abgeschöpft werden kann.

Bekanntlich ergibt sich gerade bei sehr großen Rotorblättern im nabennahen Bereich eine sehr große Rotorblattbreite. Damit auch ein Transport solcher Rotorblätter noch möglich ist (die Breite des Rotorblatts im nabennahen Bereich kann bei großen Rotorblättern, also Rotorblätter die länger sind als 30 m, durchaus 5 m bis 8 m betragen), kann das Rotorblatt zweiteilig ausgebildet sein, wobei während des Transports beide Teile getrennt sind und nach dem Transport zusammengesetzt werden können. Hierzu werden beide Teile von Installation an der Windenergieanlage miteinander verbunden, beispielsweise über Schraubverbindungen und unlösbare Verbindungen (Kleben). Dies ist insbesondere bei großen Rotorblättern kein Problem, da die Rotorblätter aufgrund ihrer Größe auch von innen her für das Zusammensetzen zugänglich sind, so dass nach außen hin ein einheitliches Rotorblatt erscheint und Trennlinien an den zusammengesetzten Teilen kaum oder gar nicht sichtbar sind.

Mit dem erfindungsgemäßen Rotorblattdesign kann - wie erste Messungen zeigen - der Wirkungsgrad gegenüber bisherigen Rotorblättern deutlich gesteigert werden.

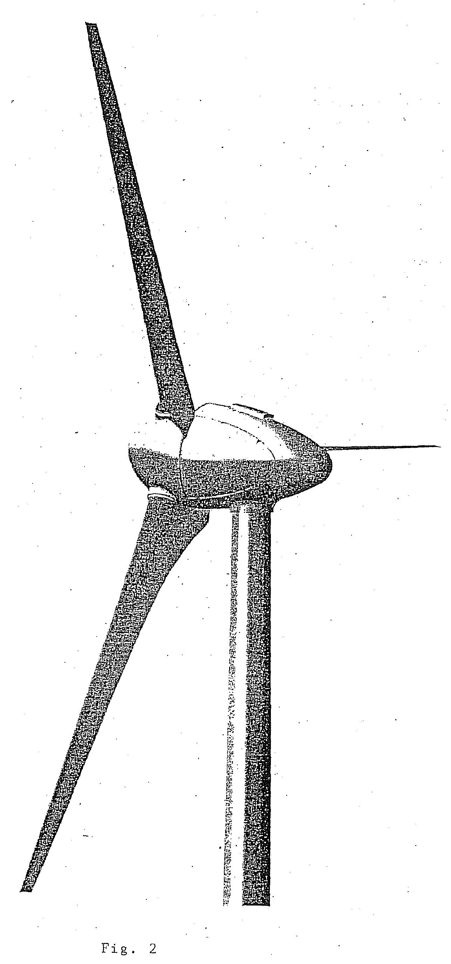

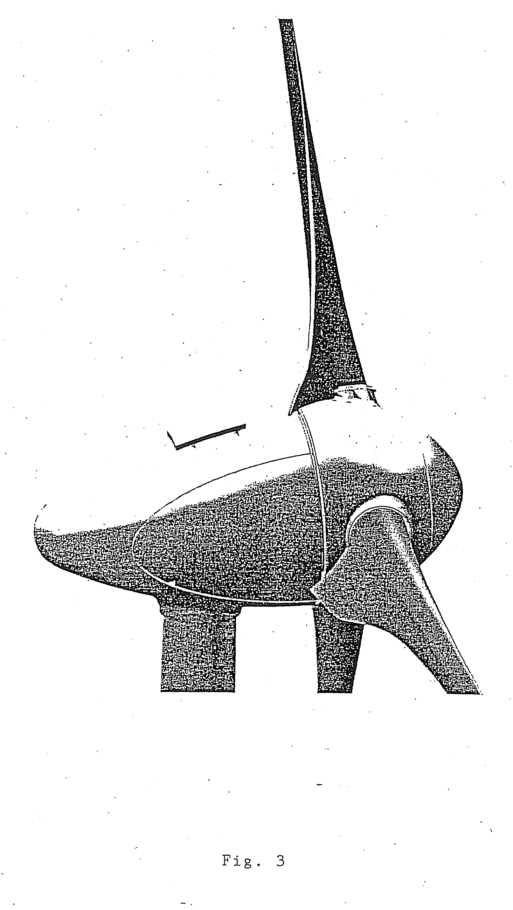

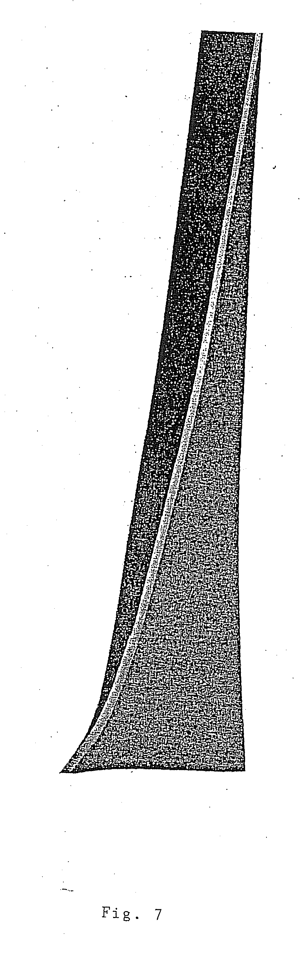

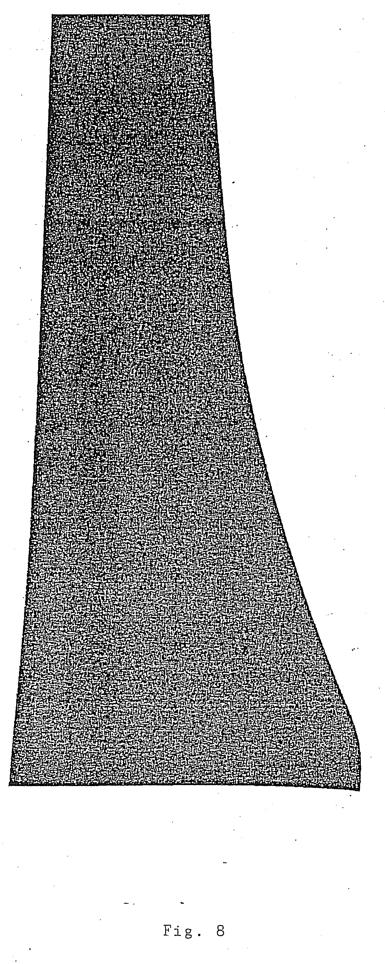

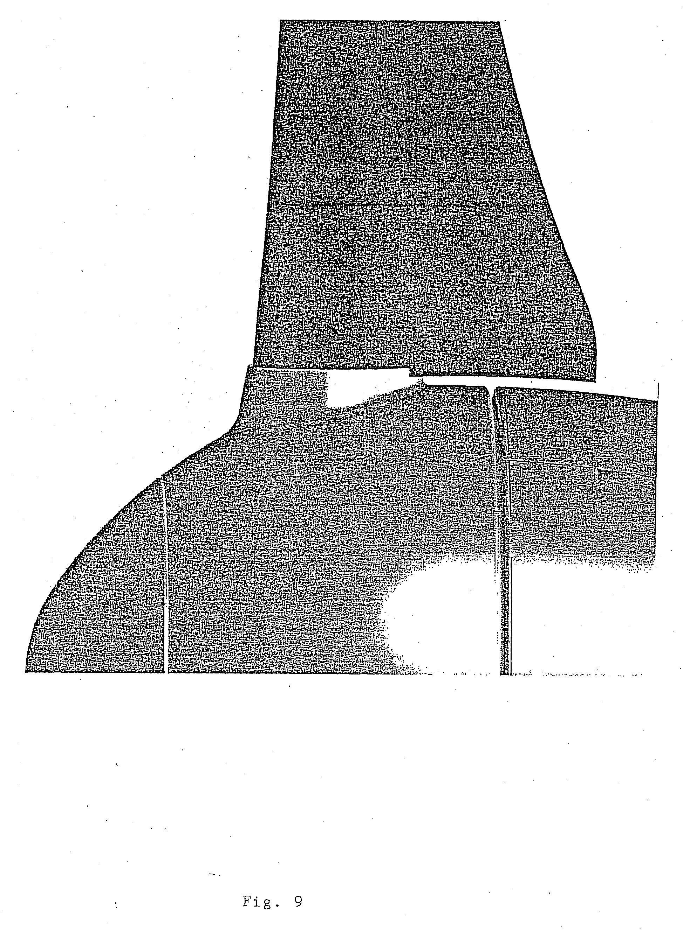

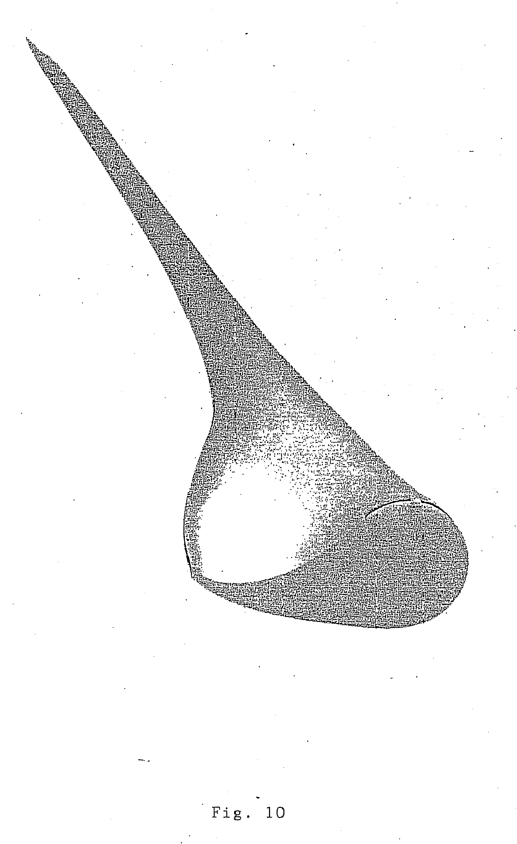

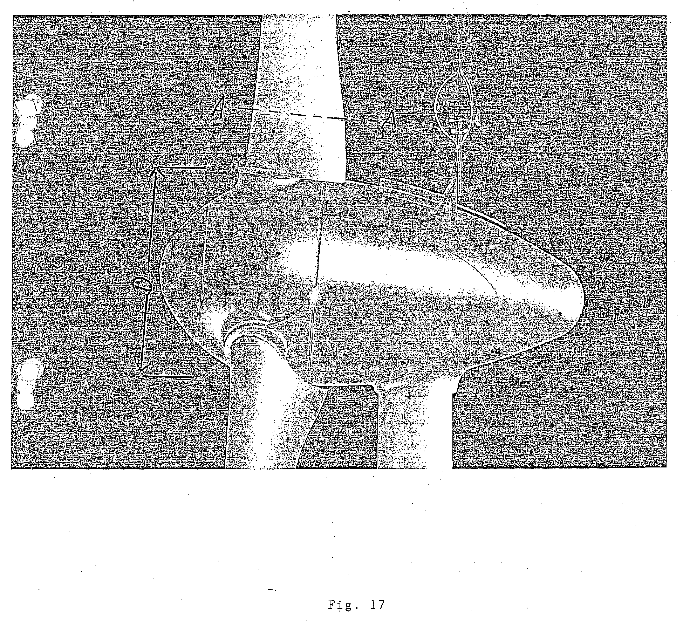

Wie aus den Fig. 1 bis 17 ersichtlich, sind bei einer erfindungsgemäßen Windenergieanlage 1 die Rotorblätter so ausgebildet, dass sie ihre größte Profiltiefe im nabennahen Bereich aufweisen und darüber hinaus sind die Rotorblätter entlang ihres gesamten Profils im nabennahen Bereich sehr nahe an die Gondelverkleidung (Spinner) des Maschinenhauses der Windenergieanlage herangerückt. Damit ergibt sich zumindest für die Stellung, bei welcher das Rotorblatt einen Winkel einnimmt, welcher bei Windgeschwindigkeiten bis zum Nennwindbereich angenommen wird, ein sehr geringer Abstand zur Gondelverkleidung. Während bei der Darstellung wie beispielsweise nach Fig. 1, 2 und 3 die Rotorblätter sehr nahe an die Außenverkleidung der Gondel auch mit ihrem hinteren Profilteil herangerückt sind, ist bei einer alternativen Ausführung, wie sie beispielsweise in Fig. 11 bis 17 dargestellt ist, die Außenverkleidung der Gondel mit einem Rotorblattteil 30 selbst versehen, welches jedoch selbst nicht integraler Bestandteil des gesamten Rotorblatt ist. So ist insbesondere in den Fig. 15 und 17 gut zu erkennen, dass das auf der Gondelaußenseite ausgebildete Rotorblattteil dort feststeht und in einem Winkel angeordnet ist, welcher der Winkelstellung eines Rotorblattes bis zur Nennwindgeschwindigkeit entspricht, so dass zumindest bei Windgeschwindigkeiten bis zum Nennwind ein minimaler Spalt zwischen der unteren Kante des Rotorblatts auch im hinteren Profiltiefenbereich und der Gondel besteht.

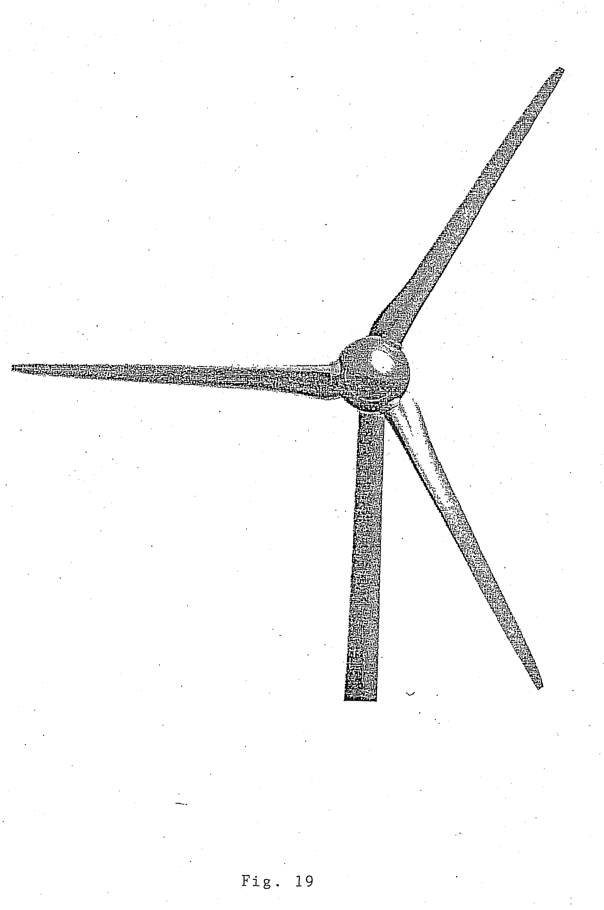

Auch in Fig. 19 ist gut zu erkennen, dass durch die erfindungsgemäße Ausführung der Rotorblätter im Rotorzentrum nur ein ganz geringes "Schlupfloch" für den Wind besteht.

Fig. 18 zeigt den Querschnitt eines erfindungsgemäßen Rotorblatts gemäß der Linie A - A in Fig. 17, also das Profil des Rotorblatts im nabennahen Bereich.

Fig. 17 enthält auch eine Angabe, was unter dem Durchmesser D des Spinners zu verstehen ist.

Der Rotordurchmesser wird durch den Durchmesser der Kreisfläche beschrieben, die vom Rotor bei Drehung überstrichen wird.

Wie in Fig. 15 und anderen Fig. zu erkennen, ist das Teil 30 des Rotorblatts, welches nicht integraler Bestandteil des drehbaren Rotorblatts ist, integraler Bestandteil der Außenverkleidung der Gondel. Das jeweilige Teil kann an der Gondel angeschraubt sein oder auch mit der Gondel einstückig verbunden oder verklebt sein.

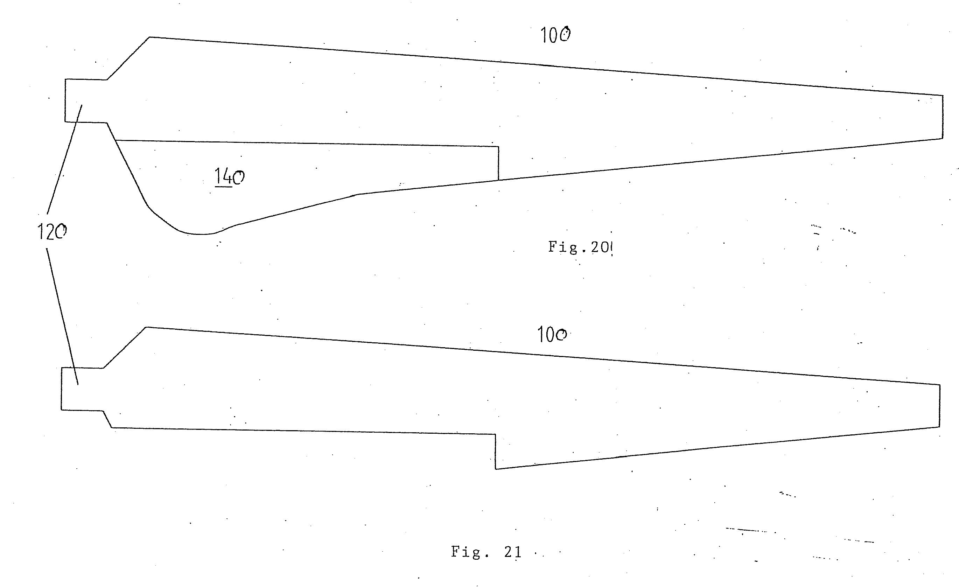

Für den Fall, dass das Rotorblatt gemäß der vorliegenden Anmeldung eine große Länge und eine entsprechende Rotorblatttiefe, also eine lange Blattsehne, im nabennahen Bereich aufweist, ist es unter Umständen aus Transportgründen vorteilhaft, das Blatt in diesem Bereich zweiteilig (oder mehrteilig) auszuführen und einen hinteren Blattbereich erst auf der Baustelle, wo das gesamte Rotorblatt an die Nabe gesetzt wird, wieder zusammenzusetzen. Bei einem solchen Fall kann beispielsweise ein Teil des Rotorblatts so ausgebildet werden wie dies in Fig. 20 dargestellt ist. Dort ist zu erkennen, dass im Blatthinterkantenbereich ein Stück fehlt. Wird das fehlende Stück angesetzt, so ergibt sich in diesem Bereich wiederum das in Fig. 18 dargestellte Profil.

Die Befestigung beider Teile miteinander kann durch Verschrauben, Verkleben oder durch andere Befestigungsarten erfolgen.

Gleichwohl ist es möglich, dass in diesem Bereich des Rotorblatts Mittel zur Veränderung der Größe der Oberfläche des Rotorblatts vorgesehen sind. Diesbezüglich zeigen die Fig. 21-33 entsprechende Ausführungen, wobei hier darauf hingewiesen werden muss, dass der dort dargestellte Rotorblattquerschnitt nur symbolisch zu verstehen ist (das Rotorblatt hat in seinem Profil vornehmlich ein Profil wie nach Fig. 18).

Die Ausführungen nach den Fig. 21-33 haben den Vorteil, dass dann im Bedarfsfall die Rotorblattfläche insgesamt verkleinert werden kann, was unter Umständen bei Extremwind, aber auch bei der Transportsituation wünschenswert ist, um einerseits einen Transport zu ermöglichen bzw. zu erleichtern und andererseits bei Extremwind Überlasten von der Windenergieanlage zu nehmen.

In einer besonders bevorzugten Ausführungsform der Erfindung ist ein Teil der Oberfläche aus einem verformbaren Material gebildet, das Teil eines geschlossenen Behälters ist (welcher den hinteren Profilkasten bildet). Dieser geschlossene Behälter kann zum Beispiel mit einem gasförmigen Medium gefüllt werden, wobei dieses gasförmige Medium mit einem vorgebbaren Druck beaufschlagt wird. Dadurch ergibt sich eine teilweise aufblasbare Oberfläche des Rotorblattes, die während des Transports oder bei Auftreten von Extremwind entlüftet werden kann und somit weniger Raum beansprucht bzw. unter dem Winddruck nachgibt. Dadurch wird die wirksame Oberfläche des Rotorblatts und damit die Angriffsfläche für den Wind kleiner. Gleichzeitig sinkt die Belastung der nachfolgenden Komponenten einschließlich des Turmes.

In einer weiteren Ausführungsform der Erfindung weist das Rotorblatt im Hinterkastenbereich (der in Fig. 20 nicht gezeigt ist) eine an sich und/oder in sich bewegbare zweite Tragstruktur auf. Damit kann das verformbare Material an vorgegebenen Stellen dieser zweiten Tragstruktur befestigt und weiterhin das verformbare Material mit einer Seite an einem drehbaren Wickelkern befestigt sein.

Im Normalbetrieb der Windenergieanlage kann nun die zweite Tragstruktur ausgefahren sein, d. h., Faltarme können vollständig gestreckt oder teleskopartige Arme voll ausgefahren sein. Das verformbare Material kann mit einer Seite an einem drehbaren Wickelkern befestigt sein. Soll nun die Rotorblattfläche verringert werden, wird - analog zu einer Markise - der Wickelkern so gedreht, dass er das verformbare Material aufwickelt. Gleichzeitig werden die Faltarme gefaltet und verkleinern die zweite Tragstruktur im Bereich der verkleinerbaren Oberfläche, so dass sich die Oberfläche des Rotorblattes entsprechend verringert.

In einer alternativen Ausführungsform der Erfindung besteht ein Teil der Oberfläche des Rotorblattes aus lamellenartigen Streifen, die jeweils auf einer um die eigene Längsachse schwenkbaren Tragschiene angeordnet sind. Dabei sind diese Lamellen im Normalbetrieb so ausgerichtet, dass sie die aerodynamisch wirksame Oberfläche des Rotorblattes vergrößern. Für den Transport und/oder bei Extremlasten können die Tragschienen so geschwenkt werden, dass diese Lamellen z.B. in den Windschatten des verbleibenden Rotorblattes gelangen und dadurch wird die Oberfläche des Rotorblattes verringert.

In einer insbesondere bevorzugten Weiterbildung der Erfindung besteht ein beweglicher Teil der aerodynamisch wirksamen Oberfläche des Rotorblattes aus einem einzelnen Flächenelement, welches in Richtung der Tiefe des Rotorblattes verschiebbar ist. Im Normalbetrieb verlängert dieses Flächenelement die Oberfläche des Rotorblattes, bevorzugt an der Saugseite, um eine große, aerodynamisch wirksame Oberfläche zu schaffen.

Zur Verringerung der Oberfläche kann dieses Flächenelement, vergleichbar mit dem Klappensystem einer Flugzeugtragfläche so verfahren werden, dass es entweder in das Rotorblatt hinein verschoben wird und somit von der verbleibenden Oberfläche des Rotorblattes abgedeckt ist, oder auf die Oberfläche des Rotorblattes verschoben wird und seinerseits die Oberfläche des Rotorblattes abdeckt. In jedem Fall ergibt sich hieraus eine Verringerung der Oberfläche des Rotorblattes.

In einer alternativen Ausführungsform der Erfindung kann dieses Flächenelement mit einer Seite schwenkbar an der ersten Tragstruktur bzw. der Hinterkante des Rotorblattes angelenkt sein. Zur Veränderung der Größe der Rotorblatt-Oberfläche kann dieses Element um diese Schwenkachse herum entweder zur Saugseite oder zur Druckseite des Rotorblattes hin geschwenkt werden.

Eine Schwenkung dieses Flächenelementes um etwa 90° bewirkt dabei, dass dieses Element im Wesentlichen senkrecht zu der Richtung der Luftströmung am Rotorblatt steht und eine entsprechende Bremswirkung entfaltet, da es für die auf der Oberfläche des Rotorblattes entlang strömende Luft ein Hindernis bildet.

Im Folgenden werden mehrere erfindungsgemäße Ausführungsformen anhand der beigefügten Zeichnungen näher erläutert. Dabei zeigen:
- Fig. 20: eine Draufsicht auf ein erfindungsgemäßes Rotorblatt;
- Fig. 21: eine Draufsicht auf den vorderen Teil eines erfindungsgemäßen Rotorblat- tes;

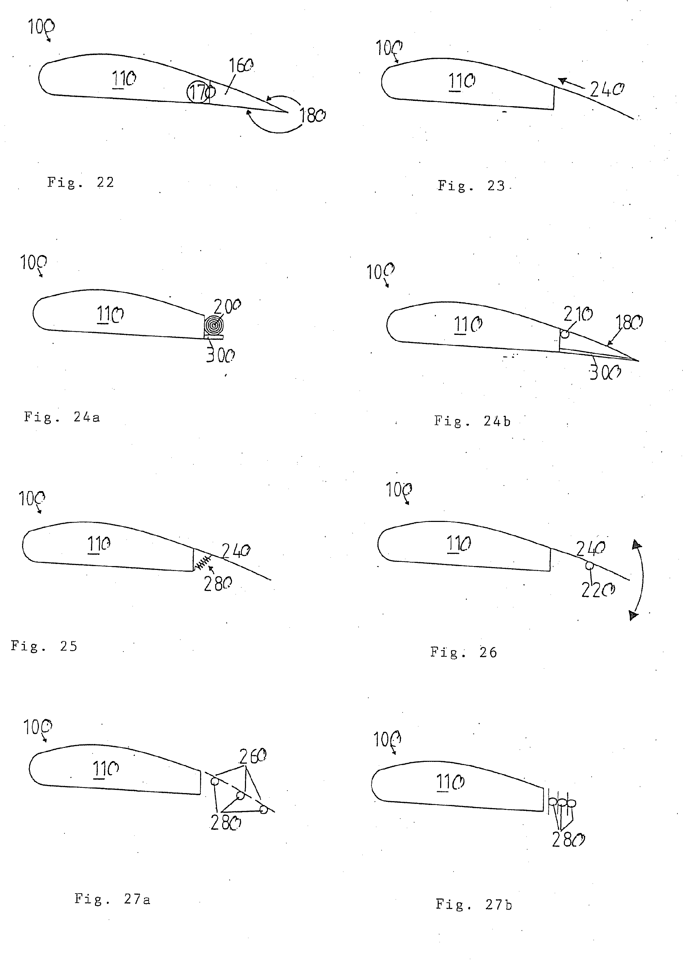

- Fig. 22: eine vereinfachte Querschnitts-Darstellung einer ersten Ausführungsform eines erfindungsgemäßen Rotorblattes;
- Fig. 23: eine vereinfachte Querschnitts-Darstellung einer zweiten Ausführungsform eines erfindungsgemäßen Rotorblattes;
- Fig. 24a,24b: eine vereinfachte Querschnitts-Darstellung einer dritten Ausführungsform eines erfindungsgemäßen Rotorblattes;
- Fig. 25: eine vereinfachte Querschnitts-Darstellung einer vierten Ausführungsform eines erfindungsgemäßen Rotorblattes;
- Fig. 26: eine vereinfachte Querschnitts-Darstellung einer fünften Ausführungsform eines erfindungsgemäßen Rotorblattes;
- Fig. 27a,27b: vereinfachte Querschnitts-Darstellungen einer sechsten Ausführungsform eines erfindungsgemäßen Rotorblattes;

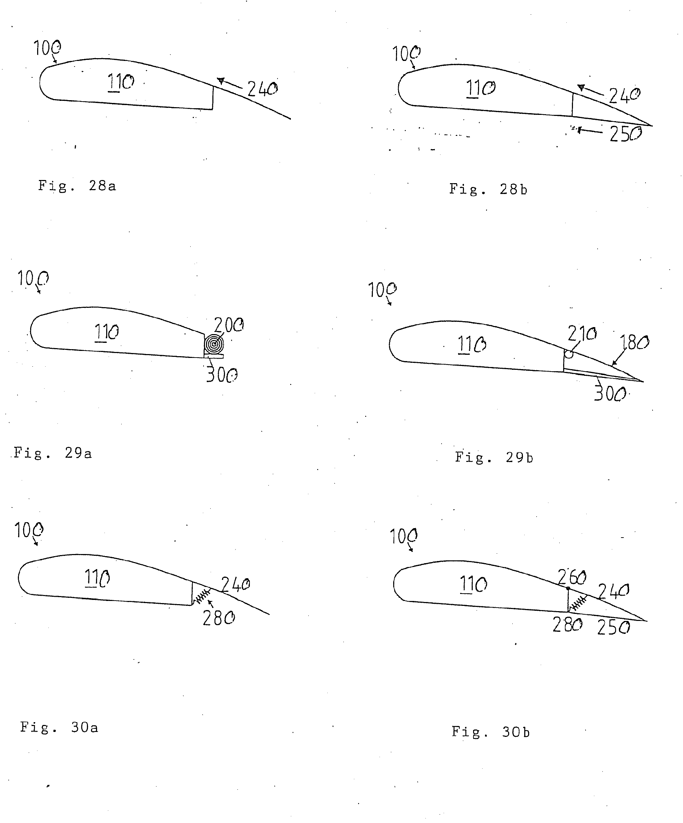

- Fig. 28: eine Draufsicht auf eine Konstruktionsvariante eines erfindungsgemäßen Rotorblattes; und
- Fig. 29-33: weitere vorteilhafte Ausführungsbeispiele der Erfindung.

In Fig. 20 ist eine Draufsicht eines vollständigen, erfindungsgemäßen Rotorblattes vereinfacht dargestellt. Das Rotorblatt 100 ist in zwei Bereiche aufgeteilt. Dabei ist das Rotorblatt 100 in wesentlichen Teilen konventionell aufgebaut. In einem der Rotorblattwurzel 120 benachbarten Bereich, nämlich dem Bereich mit der größten Blatttiefe ist jedoch eine Teilung des Rotorblattes erkennbar. Diese Teilung markiert den Bereich des Rotorblattes 140, dessen Oberfläche bei Bedarf verringert und somit der Einwirkung des Windes entzogen werden kann.

Der feste Teil des Rotorblattes 100, dessen Oberfläche unverändert bleibt, ist in Fig. 21 gezeigt. Wie in dieser Fig. deutlich erkennbar ist, ist die aerodynamisch wirksame Oberfläche des Rotorblattes 100 deutlich verringert, und dadurch ist auch die Belastung, insbesondere in Extremwind-Situationen, deutlich geringer als bei einem in konventioneller Weise aufgebauten Rotorblatt.

Fig. 22 zeigt eine vereinfachte Querschnitts-Darstellung einer ersten erfindungsgemäßen Ausführungsform. Dabei ist das Rotorblatt 100 in einen vorderen Bereich 110 und einen Hinterkasten 140 aufgeteilt. Dieser Hinterkasten 140 besteht aus zwei Bahnen verformbaren Materials 180, die zusammen mit der Rückwand des vorderen Bereiches 110 einen geschlossenen Behälter 160 bilden. Wird nun dieser geschlossene Behälter 160 unter Druck mit einem gasförmigen Medium befüllt, bildet das verformbare Material 180 einen Teil (in Fig. 20 mit dem Bezugszeichen 140 kenntlich gemacht) der im Normalbetrieb aerodynamisch wirksamen Oberfläche des erfindungsgemäßen Rotorblattes 100.

Durch eine geeignete Wahl des Fülldruckes ergibt sich eine solche Stabilität dieses Teils des Rotorblattes 100, dass er bei normalen Windverhältnissen seine normale Wirkung entfaltet. In einer Extremwind-Situation ist der Winddruck auf diesen Teil des Rotorblattes 100 jedoch größer, so dass dann der äußere Druck größer als der Innendruck ist, und somit kommt es zu einer Verformung des Rotorblattes im Bereich des Hinterkastens 140 und das Rotorblatt gibt dem äußeren Winddruck nach. Dadurch wird die Angriffsfläche für diesen Extremwind geringer und damit die Lasten auf die nachfolgende Konstruktion kleiner. Ergänzend sei ausgeführt, dass dieser Teil des Hinterkastens (in dem das Füllmedium untergebracht ist), z.B. beim Überschreiten einer vorgegebenen Windgeschwindigkeit aktiv entleert werden kann, um die Oberfläche des Rotorblattes zu verkleinern. Diese aktive Entleerung hat den Vorteil, dass die Form des Rotorblattes jederzeit definiert ist, während bei einem Nachgeben des Hinterkastens infolge äußeren Druckes unbestimmte Situationen auftreten könnten.

Um Beschädigungen insbesondere des Behälters 160 zu vermeiden, kann z.B. ein (nicht dargestelltes) Überdruckventil vorgesehen sein, durch welches ein sich im Behälter 160 bildender Überdruck entweichen kann.

Durch die Verwendung eines Kompressors 170 kann der für den Normalbetrieb erforderliche Druck wieder hergestellt werden. Werden weiterhin (ebenfalls nicht dargestellte) steuerbare Ventile und/oder Drucksensoren vorgesehen, kann der Fülldruck in dem Behälter 160 auch bei Schwankungen des Winddruckes nachgeführt werden, um so stets optimale Betriebsbedingungen beizubehalten.

Fig. 23 zeigt eine zweite Ausführungsform der vorliegenden Erfindung, bei welcher anstelle eines vollständigen Hinterkastens 140 die Oberfläche der Saugseite des Rotorblattes 100 verlängert ist. Diese Verlängerung ist ein Flächenelement 240, welches sich an die Oberfläche des vorderen Bereiches 110 anschließt.

Zur Verringerung der aerodynamisch wirksamen Fläche kann dieses Flächenelement 240 in der Richtung des Pfeiles verschoben werden. Dieses Verschieben kann z.B. hydraulisch, nämlich mit entsprechenden Hydraulikzylindern, pneumatisch, mit Pneumatikzylindern, durch Elektroantriebe oder auf andere geeignete Weise erfolgen. Dazu müssen natürlich entsprechende (jedoch aus Gründen der Übersichtlichkeit in der Fig. nicht dargestellte) Pumpen, Kompressoren oder Antriebe (Aktuatoren) vorgesehen sein.

Dabei kann dieses Verschieben in den vorderen Bereich hinein erfolgen, so dass die Oberfläche des vorderen Bereiches 110 das Flächenelement 240 überdeckt. Alternativ kann die Verschiebung auch auf der Oberfläche des vorderen Bereiches 110 erfolgen, so dass das Flächenelement 240 seinerseits den entsprechenden Teil der Oberfläche des vorderen Bereiches 110 überdeckt. In beiden Fällen ergibt sich eine Verringerung der aerodynamisch wirksamen Oberfläche des Rotorblattes 100.

Eine dritte Ausführungsform der vorliegenden Erfindung ist in den Fig. 24a und 24b gezeigt. Fig. 24a zeigt einen Wickel 200 eines verformbaren Materials und das Bezugszeichen 300 bezeichnet Faltarme, die im gefalteten Zustand sind. Die Mechanik kann hier vergleichbar mit derjenigen einer Markise sein.

In Fig. 24b ist diese Ausführungsform im Zustand des Normalbetriebs gezeigt. Die Faltarme 300 sind gestreckt, und da das verformbare Material 180 daran befestigt ist, wurde dieses beim Ausfahren der Faltarme 300 von dem Wickel 200 abgewickelt, so dass der Wickelkern 210 jetzt nicht mehr den gesamten Materialwickel trägt.

In dieser abgewickelten Situation ist das verformbare Material 180 einerseits an dem Wickelkern 210 und andererseits an den in der Fig. nach rechts weisenden Enden der Faltarme 300 befestigt. Diese Enden der Faltarme 300 können wiederum durch einen nicht dargestellten Steg verbunden sein, um einerseits eine höhere Festigkeit der Konstruktion zu erreichen und andererseits das verformbare Material zu fixieren.

Um ein Nachgeben des verformbaren Materials 180 zwischen dem Wickelkern 210 und den äußeren Enden der Faltarme 300 zu verhindern, kann unterhalb des verformbaren Materials 180 eine (nicht dargestellte) scherengitterartige Vorrichtung vorgesehen sein, die synchron mit den Faltarmen 30 betätigt wird und das verformbare Material 180 im ausgefahrenen Zustand stützt.

Ein Verringern der wirksamen Oberfläche verläuft in umgekehrter Weise; die Faltarme 300 und das (nicht dargestellte) Scherengitter werden eingefahren (gefaltet) und gleichzeitig wird das verformbare Material 180 auf dem Wickelkern 210 aufgewickelt, so dass sich schließlich wieder der in Fig. 24a dargestellte Wickel 200 ergibt und die wirksame Oberfläche des Rotorblattes 100 verringert ist.

In einer in Fig. 25 gezeigten vierten Ausführungsform der Erfindung ist das Flächenelement 240 an der Rückseite des vorderen Bereiches 110 schwenkbar angelenkt und verlängert somit die Saugseite dieses vorderen Bereiches 110. Dabei wird das Flächenelement 240 von einer Druckfeder 280 gestützt, die zwischen dem Flächenelement 240 und der Tragkonstruktion des vorderen Bereiches 110 angeordnet ist.

Im Normalbetrieb stützt diese Druckfeder 280 das Flächenelement 240 so, dass es die gewünschte Position beibehält. Ergibt sich nun jenseits der normalen Betriebsbedingungen ein Winddruck auf der Oberseite des Rotorblattes 100, steigt der Druck auf die Oberfläche des Flächenelementes 240 und überwindet die Kraft der Feder 280, so dass das Flächenelement 240 in der Fig. 25 nach unten gedrückt wird, dem Winddruck also nachgibt, und somit die aerodynamisch wirksame Oberfläche entsprechend verringert.

Alternativ zu der Feder 280 können natürlich entsprechende teleskopische Elemente wie hydraulische oder pneumatische Vorrichtungen oder mechanische Vorrichtungen zur aktiven Verstellung des Flächenelements gebildet sein, z.B. können Gewindestangen und Schneckenantrieb o.ä. verwendet werden, um das Flächenelement 240 in einer ersten vorgegebenen Position zu halten oder in eine zweite vorgegebene Position zu verfahren. Für die Betätigung dieser Stellglieder müssen natürlich entsprechende Pumpen, Kompressoren oder Antriebe vorgesehen sein, die in dieser Fig. wiederum zur Verbesserung der Übersichtlichkeit nicht dargestellt sind.

Ebenso kann wiederum die Windlast erfasst werden, die auf das Flächenelement 240 einwirkt und abhängig von dieser erfassten Windlast kann das Flächenelement 240 um die Schwenkachse herum geschwenkt werden, um eine für die momentanen Betriebsbedingungen optimale Einstellung vorzunehmen.

Fig. 26 zeigt eine fünfte Ausführungsform der Erfindung. In dieser fünften Ausführungsform ist das Flächenelement 240 anstelle einer schwenkbaren Anlenkung an der Rückseite des vorderen Bereiches 110 auf einer um ihre eigene Längsachse drehbare Schwenkachse - 220 angeordnet. In der in Fig. 26 gezeigten Position verlängert das Flächenelement 24 wiederum die aerodynamisch wirksame Oberfläche des Rotorblattes 100.

Zur Verringerung dieser Oberfläche wird nun die Schwenkachse 220 mit dem daran befestigten Flächenelement 240 um ihre Längsachse derart gedreht, dass sich das äußere Ende des Flächenelementes 240 in einer der beiden durch den Doppelpfeil gezeigten Richtungen bewegt. Dies führt wiederum zu einer Verringerung der aerodynamisch wirksamen Oberfläche des Rotorblattes 100 und damit einhergehend zu einer Veränderung der Windlast auf das Rotorblatt 100 und alle nachfolgenden Komponenten der Windenergieanlage.

Eine Variante der in Fig. 26 gezeigten Ausführungsform ist in den Fig. 27a und 27b dargestellt. Dabei ist das in Fig. 26 mit 240 bezeichnete Flächenelement in Fig. 27a in drei lamellenartige Elemente 260 aufgeteilt. Diese sind in Fig. 27a absichtlich mit einem Abstand dargestellt, um diese Aufteilung zu verdeutlichen. In einer tatsächlichen Ausführungsform sind diese drei Elemente natürlich so angeordnet, dass sie eine möglichst geschlossene Fläche bilden, die wiederum möglichst glatt an den vorderen Bereich 110 des Rotorblattes 100 anschließt.

Jede der Lamellen 260 ist auf einer eigenen Schwenkachse angeordnet. Jede dieser Schwenkachsen 280 ist um ihre eigene Längsachse drehbar und gestattet so durch ein Drehen der Schwenkachse 280 um die Längsachse ein Verschwenken der Lamellen 260.

Fig. 27b zeigt die erfindungsgemäße Vorrichtung in der Situation, in welcher diese Lamellen so geschwenkt sind, dass die aerodynamisch wirksame Oberfläche des Rotorblattes 100 verringert ist. Dabei sind die Lamellen 260 in den Strömungsschatten des vorderen Bereiches 110 geschwenkt. Dadurch wirken sie einerseits nicht mehr als Rotorblatt-Oberfläche, sind andererseits aber auch dem Angriff des Windes entzogen und damit keinen erhöhten Belastungen ausgesetzt.

Eine solche Anordnung wird erreicht, indem neben einer Drehung der Schwenkachsen 280 um ihre Längsachsen außerdem der Abstand zwischen der in der Fig. linken Schwenkachse 280 und dem vorderen Bereich 110 des Rotorblattes 100 einerseits und zwischen den Schwenkachsen 280 untereinander andererseits verringert wird.

Sofern in den Fig. nur eine Verlängerung der Saugseite der Oberfläche dargestellt ist, kann natürlich alternativ oder ergänzend die Oberfläche der Druckseite entsprechend verändert werden.

Wird eine Windenergieanlage mit den vorbeschriebenen Rotorblättern ausgestattet, so ist es möglich, dass bei Auftreten einer Extremwind-Situation nicht nur die große Windstärke festgestellt wird, was mittels Windgeschwindigkeitsmessgeräten erfolgen kann, sondern dass auch durch eine entsprechende Steuerung die Größe der Oberfläche des Rotorblattes dann deutlich verringert wird. Wie in Fig. 20 und 21 zu erkennen, ist beispielsweise die Fläche des Rotorblattes nach Fig. 20 um mehr als 10% größer als die Oberfläche des Rotorblattes nach Fig. 21. Während die Normalgröße des Rotorblattes im Nennbetrieb der Windenergieanlage eingestellt wird, beispielsweise bei einer Windgeschwindigkeit im Bereich von 2-20 m/s Windgeschwindigkeit, kann die Oberflächengröße bei einer Windgeschwindigkeit von oberhalb von 20 m/s verringert werden, so dass die Oberflächengröße deutlich - wie in Fig. 21 dargestellt - abnimmt.

Die Steuerung ist bevorzugt computergestützt und sorgt im Bedarfsfall für die jeweils optimal eingestellte Oberflächengröße des Rotorblattes.

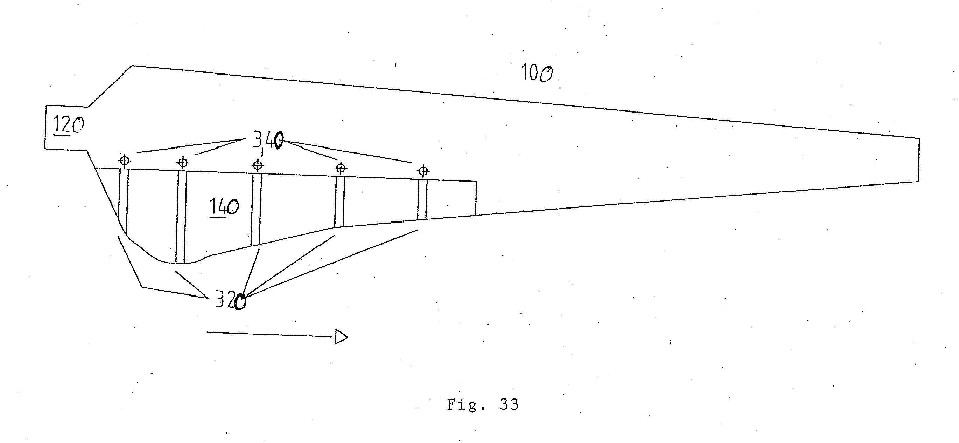

Fig. 33 zeigt eine weitere Konstruktionsvariante eines erfindungsgemäßen Rotorblattes. Dabei wird die Struktur durch verschwenkbare Bügel 320 aufgebaut, die mit einer wiederum verformbaren Folie bespannt sein können und in Lagepunkten 340 schwenkbar gelagert sind. Durch eine Bewegung in Richtung der Rotorblattspitze (Pfeil) können diese Schwenkbügel nun beispielsweise um die Lagerpunkte 340 herumgeschwenkt werden und somit das Hinterkasten-Profil verändern.

Die weiteren Fig. 28 bis 33 zeigen weitere alternative bzw. ergänzende Ausführungsformen zu den bisherigen Fig. 22 bis 27b.

Fig. 30b (Fig. 30a entspricht im Wesentlichen Fig. 25) ist in Ergänzung zu Fig. 25 ein Element 250 an der Druckseite dargestellt. Da der Angriffspunkt für die Feder 280 nicht gegenüber der Darstellung in Fig. 25 bzw. 30a geändert wurde, müssen die Elemente 240 und 250 an der Blatthinterkante zusammenhängen, so dass sie um einen Anlenkpunkt 260 schwenkbar sind. Unter Umständen bietet es sich bei dieser Lösung an, eine Überlappung von dem Rotorblattkasten 110 über das Element 250 entlang der Rotorblattlänge auszubilden.

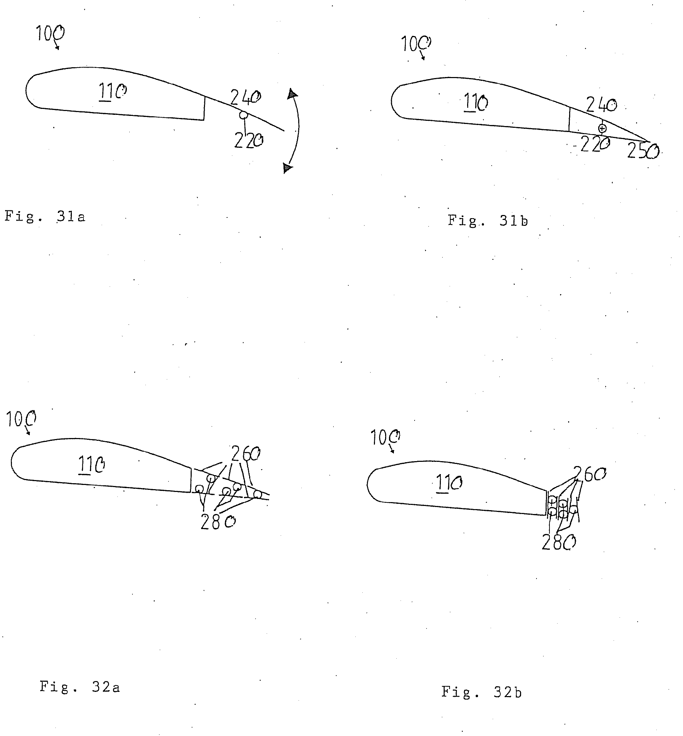

Fig. 31b (Erweiterung von dem, was in Fig. 26 bzw. Fig. 31a dargestellt ist) ist ebenfalls ein druckseitiges Element 250 dargestellt, dass in dem dargestellten Fall über eine mechanische Verbindung ebenso wie das saugseitige Element 240 an einer gemeinsamen Welle 120 befestigt ist.

Die Fig. 32a und 32b zeigen eine Weiterentwicklung dessen, was bereits in den Fig. 27a und 27b dargestellt ist. Dabei sind für entsprechende Elemente an der Druckseite teils eigene Wellen 280 dargestellt. Fig. 32a zeigt analog zu Fig. 27a ein Rotorblatt im Normalbetrieb, Fig. 32b zeigt eine Situation, in der der Hinterkasten durch eine entsprechende Rotation bzw. durch Verfahren der Wellen 280 nicht mehr wirksam ist.

Nachfolgend eine Liste weiterer Ausführungsformen der Erfindung
Ausführungsform 1 Rotorblatt einer Windenergieanlage, wobei das Rotorblatt eine Dickenrücklage etwa im Bereich von 15 % bis 40 %, bevorzugt im Bereich von etwa 23 % bis 28 % aufweist und wobei die größte Profildicke etwa 20 % bis 45 %, bevorzugt etwa 32 % bis 36 % beträgt und wobei das Rotorblatt bevorzugt zweiteilig ausgeführt ist.
Ausführungsform 2 Rotorblatt nach Ausführungsform 1,
   **dadurch gekennzeichnet, dass** der Querschnitt des Rotorblattes durch eine Skelettlinie beschrieben ist, deren größte Wölbung in einem Bereich von 50° bis 70°, bevorzugt etwa im Bereich von 60° bis 65° liegt.
Ausführungsform 3 Rotorblatt nach Ausführungsform 2,
   **dadurch gekennzeichnet, dass** die größte Wölbung etwa 3 % bis 10 %, bevorzugt etwa 4 % bis 7 %, bemisst.
Ausführungsform 4 Rotorblatt nach einer der vorhergehenden Ausführungsformen,
   **dadurch gekennzeichnet, dass** dieser Querschnitt bevorzugt im unteren Drittel des Rotorblatts, der sich dem Rotorblattanschluss anschließt, ausgebildet ist.
Ausführungsform 5 Rotorblatt nach einer der vorhergehenden Ausführungsformen,
   **dadurch gekennzeichnet, dass** das Rotorblatt eine Druckseite und eine Saugseite aufweist, wobei die Druckseite ein Teil mit einer konkaven Krümmung aufweist und dass auf der Saugseite ein nahezu geradliniger Abschnitt ausgebildet ist.
Ausführungsform 6 Windenergieanlage mit wenigstens einem Rotorblatt, das an einer Rotornabe angebracht ist, sowie einer Nabenverkleidung,
   **dadurch gekennzeichnet, dass** auf der Außenseite der Nabenverkleidung ein Teil eines Rotorblatts ausgebildet ist, der mit der Nabenverkleidung fest verbunden ist, nicht aber integraler Bestandteil des Rotorblatts des Windenergieanlage ist.
Ausführungsform 7 Windenergieanlage nach Ausführungsform 6,
   **dadurch gekennzeichnet, dass** das Profil des Rotorblattteils, welches an der Nabenverkleidung ausgebildet ist, im Wesentlichen dem Profil des Rotorblatts im nabennahen Bereich entspricht.
Ausführungsform 8 Windenergieanlage nach Ausführungsform 7,
   **dadurch gekennzeichnet, dass** der Teil des Rotorblatts, welcher auf der Nabenverkleidung ausgebildet ist, feststeht und im Wesentlichen so ausgerichtet ist, dass er bei Stellung des Rotorblatts bei Nennwindgeschwindigkeit unterhalb der Nennwindgeschwindigkeit direkt unterhalb des nabennahen Bereichs des Rotorblatts der Windenergieanlage liegt.
Ausführungsform 9 Windenergieanlage mit wenigstens einem Rotorblatt nach einer der vorhergehenden Ausführungsformen.
Ausführungsform 10 Windenergieanlage, insbesondere nach Ausführungsform 9, wobei die Windenergieanlage einen Rotor aufweist, der wenigstens ein Rotorblatt aufnimmt, welches im Bereich der Rotorblattnabe seine größte Profiltiefe aufweist, wobei das Verhältnis von Profiltiefe zum Rotordurchmesser den Wert annimmt, welcher im Bereich von etwa 0,04 bis 0,1 liegt, bevorzugt etwa einen Wert von 0,055 bis 0,7, z. B. 0,061 aufweist.
Ausführungsform 11 Windenergieanlage, insbesondere nach Ausführungsform 9 oder 10, mit einem Maschinenhaus, welches einen Generator und einen mit dem Generator verbundenen Rotor aufnimmt, wobei der Rotor wenigstens zwei Rotorblätter enthält, wobei der Rotor eine Nabe aufweist, die mit einer Verkleidung (Spinner) versehen ist, wobei das Verhältnis der Profiltiefe eines Rotorblatts zum Durchmesser des Spinners einen Wert aufweist, welcher größer ist als 0,4, bevorzugt in einem Wertbereich zwischen 0,5 und 1 liegt.
Ausführungsform 12 Windenergieanlage, insbesondere nach einer der vorhergehenden Ausführungsformen, mit einem Rotor, welcher bevorzugt mehr als ein Rotorblatt aufweist, wobei das Rotorblatt eine der aerodynamischen Optimalform mehr oder weniger angenäherte Trapezform aufweist und das Rotorblatt im Bereich der Rotorblattwurzel seine größte Breite aufweist und die der Gondel der Windenergieanlage zugewandte Kante der Rotorblattwurzel so ausgebildet ist, dass der Verlauf der Kante im Wesentlichen der äußeren Kontur der Gondel (in Längsrichtung) angepasst ist.
Ausführungsform 13 Windenergieanlage nach Ausführungsform 12,
   **dadurch gekennzeichnet, dass** die untere, der Gondel zugewandte Kante des Rotorblatts im Wurzelbereich bei Verdrehung des Rotorblatts in Fahnenstellung nahezu parallel zur äußeren Kontur der Gondel liegt.
Ausführungsform 14 Windenergieanlage nach Ausführungsform 13,
   **dadurch gekennzeichnet, dass** der Abstand der der unteren Gondel zugewandten Kante des Rotorblatts und der äußeren Kontur der Gondel in Fahnenstellung weniger als 50 cm, vorzugsweise weniger als 20 cm beträgt.
Ausführungsform 15 Windenergieanlage nach einer der vorhergehenden Ausführungsformen,
   **dadurch gekennzeichnet, dass** das Rotorblatt im Wurzelbereich aus der Hauptblattebene gekippt ist.
Ausführungsform 16 Windenergieanlage nach einer der vorhergehenden Ausführungsformen,
   **dadurch gekennzeichnet, dass** das Rotorblatt im Wurzelbereich zweiteilig ausgebildet ist, wobei eine in Längsrichtung des Rotorblatts gerichtete Trennlinie ausgebildet ist.
Ausführungsform 17 Windenergieanlage nach Ausführungsform 16,
   **dadurch gekennzeichnet, dass** beide Teile des Rotorblatts erst kurz vor Installation des Rotorblatts in der Windenergieanlage zusammengesetzt werden.
Ausführungsform 18 Windenergieanlage nach den Ausführungsformen 16 und 17,
   **dadurch gekennzeichnet, dass** die Teile des Rotorblatts während des Transports des Rotorblatts getrennt sind.
Ausführungsform 19 Windenergieanlage, insbesondere nach einer der vorhergehenden Ausführungsformen,
   **dadurch gekennzeichnet, dass** die Windenergieanlage wenigstens ein Rotorblatt aufweist, welches durch eine Saugseite und eine Druckseite gekennzeichnet ist, wobei das Verhältnis der Länge der Saugseite zur Länge der Druckseite kleiner ist als ein Wert von 1,2, bevorzugt kleiner ist als 1,1 und insbesondere in einem Wertebereich zwischen 1 und 1,03 liegt

## Patentansprüche

1. Rotorblatt einer Windenergieanlage, wobei das Rotorblatt in zwei Bereiche aufgeteilt ist, wobei das Rotorblatt eine Rotorblattwurzel (21) aufweist, und wobei das Rotorblatt in dem zur Rotorblattwurzel benachbarten Bereich die größte Blatttiefe aufweist, wobei das Rotorblatt zweiteilig ausgebildet und somit in einen vorderen Bereich (110) und einen Hinterkasten (140) aufgeteilt ist, der Hinterkasten aus zwei Bahnen verformbaren Materials (180) besteht, die zusammen mit der Rückwand des vorderen Bereichs (110) einen geschlossenen Behälter (160) bilden und der geschlossene Behälter (160) mit einem gasförmigen Medium unter Druck befüllbar ist und das verformbare Material einen Teil der im Normalbetrieb aerodynamisch wirksamen Oberfläche des Rotorblattes bildet.

2. Rotorblatt nach Anspruch 1,
**dadurch gekennzeichnet, dass** durch eine geeignete Wahl des Fülldrucks sich eine solche Stabilität dieses Teils des Rotorblattes ergibt, dass er bei normalen Windverhältnissen seine normale Wirkung entfaltet.

3. Rotorblatt nach Anspruch 2,
**dadurch gekennzeichnet, dass** in einer Extremwindsituation der Winddruck auf diesen Teil (140) des Rotorblattes größer ist, so dass dann der äußere Druck größer ist als der Innendruck und somit es zu einer Verformung des Rotorblattes im Bereich des Hinterkastens (140) kommt und das Rotorblatt dem äußeren Winddruck nachgibt, wodurch die Angriffsfläche für diesen Extremwind geringer und damit die Lasten auf die Konstruktion kleiner werden.

4. Rotorblatt nach einem der vorhergehenden Ansprüche,
**dadurch gekennzeichnet, dass** der Hinterkasten (140), in dem dass Füllmedium untergebracht ist, bei Überschreiten einer vorgegebenen Windgeschwindigkeit aktiv entleert wird, um die Oberfläche des Rotorblattes zu verkleinern.

5. Rotorblatt nach einem der vorhergehenden Ansprüche,
**dadurch gekennzeichnet, dass** zur Vermeidung von Beschädigungen des Behälters (160) ein Überdruckventil vorgesehen ist, durch welches sich ein im Behälter (160) bildender Überdruck entweichen kann.

6. Rotorblatt nach einem der vorhergehenden Ansprüche,
**dadurch gekennzeichnet, dass** durch Verwendung eines Kompressors (170) der für den Normalbetrieb erforderliche Druck wiederherstellbar ist.

7. Rotorlbatt nach einem der vorhergehenden Ansprüche,
**dadurch gekennzeichnet, dass** steuerbare Ventile und/oder Drucksensoren vorgesehen werden, mittels denen der Fülldruck in dem Behälter (160) auch bei Schwankungen des Winddrucks nachführbar ist.

8. Windenergieanlage mit einem Rotorblatt nach einem der vorhergehenden Ansprüche.

9. Windenergieanlage nach Anspruch 8,
**dadurch gekennzeichnet, dass** das Rotorblatt im Wurzelbereich zweiteilig ausgebildet ist, wobei eine in Längsrichtung des Rotorblatts gerichtete Trennlinie ausgebildet ist.

10. Windenergieanlage nach einem der vorhergehenden Ansprüche,
**dadurch gekennzeichnet, dass** beide Teile des Rotorblatts erst kurz vor Installation des Rotorblatts in der Windenergieanlage zusammengesetzt werden.

11. Windenergieanlage nach einem der vorhergehenden Ansprüche,
**dadurch gekennzeichnet, dass** die Teile des Rotorblatts während des Transports des Rotorblatts getrennt sind.
